# EUROPÄISCHE PATENTSCHRIFT

(11) **EP 0 457 931 B1**
(45) Veröffentlichungstag und Bekanntmachung des Hinweises auf die Patenterteilung: **20.09.1995**
(21) Anmeldenummer: 90109576.0
(22) Anmeldetag: 21.05.1990
(51) Int. Cl.: H04N 9/64, H04N 5/14

(54) **Verfahren zur Farbkantenverbesserung bei der Darstellung von Farbfernsehbildern und Fernsehgerät zur Durchführung des Verfahrens**
Method to improve colour edges by displaying colour television pictures
Procédé d'amélioration de bords colorés par visualisation d'images de télévision en couleur et récepteur de télévision pour sa mise en oeuvre

(43) Veröffentlichungstag der Anmeldung: 27.11.1991
(73) Patentinhaber: SIEMENS AKTIENGESELLSCHAFT, 80333 München (DE)
(72) Erfinder: Scheffler, Günter, D-8000 München 45 (DE)

(56) Entgegenhaltungen:
- EP-A- 0 198 103
- EP-A- 0 224 302
- GB-A- 2 144 302
- IEEE TRANSACTIONS ON CONSUMER ELECTRONICS, vol. 31, no. 3 August 1985, New York,US;Seiten 156 - 162; H. HARLOS: "Picture signal improvement in colour TV receivers"

## Beschreibung

Verfahren zur Farbkantenverbesserung bei der Darstellung von Farbfernsehbildern und Fernsehgerät zur Durchführung des Verfahrens

Die Erfindung betrifft ein Verfahren zur Farbkantenverbesserung bei der Darstellung von Farbfernsehbildern, die aus Chrominanzsignalen und einem Luminanzsignal gewonnen werden, bei dem die Chrominanzsignale und das Luminanzsignal als digitale Signale verarbeitet werden, für jedes Chrominanzsignal zu Beginn einer Flanke ein erster Signalwert und am Ende dieser Flanke ein zweiter Signalwert erfaßt werden, die zwischen dem ersten Signalwert und dem zweiten Signalwert auftretende Flanke durch ein versteilertes Flankensignal ersetzt wird, die in den Chrominanzsignalen auftretenden Flanken versteilert werden und das Luminanzsignal an die Chrominanzsignale laufzeitangepaßt wird.

Die Erfindung betrifft außerdem ein Farbfernsehgerät, das zur Durchführung des Verfahrens geeignet ist.

Ein besonderes Problem bei der Darstellung übertragener farbiger Fernsehbilder ist das Verwischen der Farbübergänge. Dabei ist es gleichgültig, ob als Fernsehnorm bei der Ausstrahlung der Farbfernsehsignale die Fernsehnorm PAL, NTSC oder SECAM verwendet wird. Besonders deutlich wird das Verwischen der Farbübergänge im Farbbalken-Testbild, bei dem zwischen den einzelnen Farbbalken für den Betrachter unangenehm wirkende verschwommene Abgrenzungen auftreten.

Der Grund hierfür liegt in der geringen Bandbreite der Chrominanzsignale bei der verschachtelten Übertragung des Luminanzsignales und der Chrominanzsignale. So steht für das Luminanzsignal etwa eine Bandbreite von 3,5 MHz und für die Chrominanzsignale nur etwa 1 MHz Bandbreite zur Verfügung. Zur Verbesserung der Farbkonturen im Farbfernsehbild steht von Valvo bereits ein integrierter Schaltkreis TDA 4650 zur Verfügung, der eine analog arbeitende sog. CTI (Colour Transient Improvement)-Schaltung enthält. Das Prinzip dieser CTI-Schaltung und deren Arbeitsweise ist beispielsweise in der Veröffentlichung IEEE Transactions on Consumer Electronics, Vol. CE-31, No. 3, August 1985 auf den Seiten 156 bis 162 beschrieben.

Wesentlich bei dieser bekannten Schaltungsanordnung ist, daß eine auftretende Flanke im Chrominanzsignal bis zu ihrem Ende unterdrückt wid. Erst wenn der Anstieg oder Abstieg dieser Flanke beendet ist, wird mit einem steilen Signalübergang auf den Endwert der Flanke geschaltet. So kann beispielsweise am Ende einer Flanke mit der Dauer von 1200 nsec eine versteilerte Flanke mit 200 nsec Dauer einsetzen. Allerdings erscheint die versteilerte Flanke des Chrominanzsignales verspätet. Das Luminanzsignal muß folglich verzögert werden. Dazu dienen in diesem bekannten analogen Schaltkreis Gyratoren, die das Luminanzsignal für eine einmal vorgegebene Zeitdauer verzögert.

Es hat sich gezeigt, daß bei diesen bekannten Verfahren folgende Punkte problematisch sind:
- Bedingt durch das oben beschriebene Verfahren ist die Gruppenlaufzeit des Systems von der Steilheit der gerade auftretenden Flanke im Chrominanzsignal abhängig. Da nämlich einerseits die ursprünglichen Flanken des Chrominanzsignales unterschiedliche Längen aufweisen können, andererseits die Laufzeitverzögerung des Luminanzsignales um die fest vorgegebene Zeitdauer erfolgt, treten ihre Flanken zu unterschiedlichen Zeiten auf, die zur Gruppenlaufzeitverzögerung führt. Dieser Fehler wird noch größer, wenn aufgrund eines geringen Signalüberganges im Chrominanzsignal überhaupt keine Flankenversteilerung durchgeführt, das Luminanzsignal aber trotzdem verzögert wird,
- das Luminanzsignal muß breitbandig mit komplexen Gyratorschaltungen laufzeitangepaßt werden. Für die Verwendung in flimmerfreien 100 Hz Fernsehgeräten kann es wegen der dort erforderlichen Bandbreite des Fernsehsignales zu Schärfeverlusten im Luminanzsignal kommen und
- innerhalb der integrierten Schaltung kann es zu Übersprechstörung zwischen den einzelnen Kanälen kommen.

In der europäischen Anmeldeschrift EP-A-0 198 103 ist ein Verfahren zur Farbkantenversteilerung gezeigt, das für digitale Verarbeitung der Chrominanzsignale geeignet ist. Eine Versteilerung einer Farbkante wird nur dann durchgeführt, wenn die Amplitudenänderung eine Amplitudenschwelle überschreitet und einen Zeitschwellwert unterschreitet. Durch entsprechende Steuerungsmaßnahmen wird dafür gesorgt, daß die versteilerte Kante am Ende der ursprünglichen unversteilerten Kante liegt.

Der Erfindung liegt die Aufgabe zugrunde, die angegebenen Nachteile zu vermeiden und ein Verfahren zur Farbkantenverbesserung anzugeben, das hinsichtlich seiner Gruppenlaufzeit unabhängig von der Steilheit der gerade auftretenden Flanken im Chrominanzsignal ist. Darüber hinaus soll ein Farbfernsehgerät angegeben werden, das zur Durchführung eines solchen Verfahrens geeignet ist.

Gelöst wird diese Aufgabe für das Verfahren dadurch, daß ein zwischen den beiden Signalwerten liegender Wendepunkt in seiner Lage erfaßt wird und das versteilerte Flankensignal bis an den Wendepunkt auf dem ersten Signalwert festgehalten wird, am Wendepunkt den Mittelwert aus dem ersten Signalwert und dem zweiten Signalwert aufweist und nach dem Wendepunkt den zweiten Signalwert aufweist.

Als besonders vorteilhaft bei dieser Lösung ist anzusehen, daß keine Verschiebung der versteilerten Flanke in Bezug auf die ursprünglich auftretende Flanke des Chrominanzsignales notwendig ist. Die Mitte der versteilerten Flanke liegt exakt in der Mitte der ursprünglich auftretenden Flanke im Chrominanzsignal. Dies wird durch das Detektieren des Wendepunktes eines Signalübergangs beim Chrominanzsignal möglich, der die exakte Lage des Signalübergangs und damit der Flanke bestimmt.

Weiterbildung der Erfindung sind Gegenstand der Ansprüche 2 bis 9.

Ein Fernsehgerät zur Durchführung des erfindungsgemäßen Verfahrens weist die Merkmale des Anspruchs 10 auf und dessen Weiterbildungen sind in den Ansprüchen 11 und 12 angegeben.

Die Erfindung wird im folgenden anhand von vier Figuren beispielhaft erläutert.

Es zeigen:
- Figur 1: ein Blockschaltbild eines Farbfernsehgerätes nach der Erfindung mit einer Farbkantenverbesserungseinrichtung,
- Figur 2: ein Blockschaltbild der Farbkantenverbesserungseinrichtung,
- Figur 3: einen möglichen Signalverlauf in der Farbkantenverbesserungseinrichtung bei einer Flankenversteilerung und
- Figur 4: einen möglichen Signalverlauf in der Fabrikantenverbesserungseinrichtung, bei der keine Flankenversteilerung durchgeführt wird.

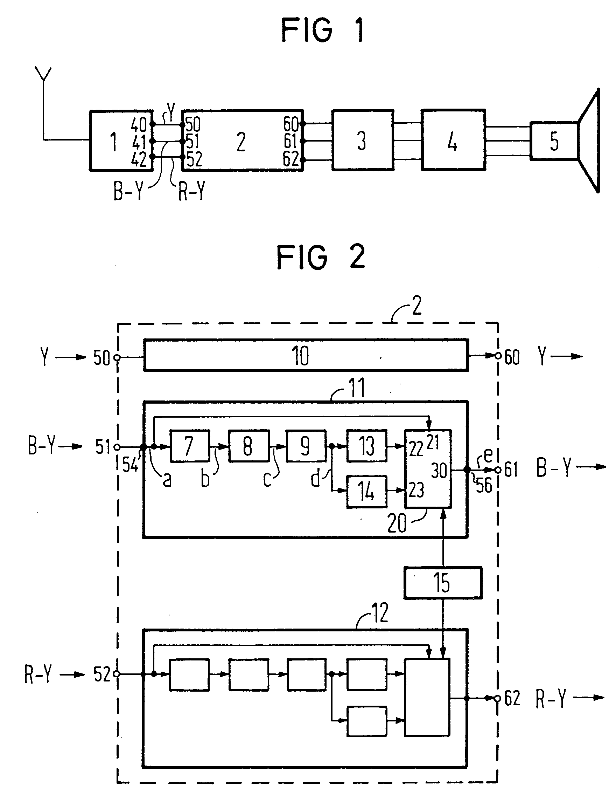

In FIG 1 ist ein Blockschaltbild eines Farbfernsehgerätes gezeigt, wie es prinzipiell bereits aus der eingangs erwähnten Veröffentlichung bekannt ist. An die Ausgangsklemmen 40, 41, 42 für ein Luminanzsignal Y und zwei Chrominanzsignale, hier die Farbdifferenzsignale B-Y und R-Y, einer an sich bekannten Empfangseinrichtung 1 zur Farbdekodierung von Fernsehsignalen, ist eine erfindungsgemäße Farbkantenverbesserungseinrichtung 2 mit ihren drei Eingangsklemmen 50, 51, 52 geschaltet. An deren Ausgangsklemmen 60, 61 und 62 schließt sich eine auch an sich bekannte Videosignalverarbeitungsstufe 3 mit nachfolgender eine Bildrohre 5 enthaltende Videoausgangsstufe 4 an.

Die Farbkantenverbesserungseinrichtung 2 enthält einen zwischen ihre Klemmen 50 und 60 geschalteten digitalen Luminanzkanal 10 mit beispielsweise Registerketten zur Laufzeitverzögerung, eine zwischen die Klemmen 51 und 61 mit ihren Klemmen 54 und 56 geschalteten ersten digitalen Chrominanzkanal 11 für das erste Chrominanzsignal B-Y und einen dazu entsprechend aufgebauten zweiten digitalen Chrominanzsignal 12 für das digitale Chrominanzsignal R-Y. Stehen das Luminanzsignal Y und die beiden Chrominanzsignale R-Y, B-Y nur analog zur Verfügung, so muß vor der Farbkantenverbesserungseinrichtung 2 noch eine Video-A/D-Wandlereinrichtung geschaltet werden, die der besseren übersichtlichkeit jedoch nicht dargestellt ist. Es ist zweckmäßig für das digitale Luminanzsignal Y und die digitalen Chrominanzsignale R-Y und B-Y jeweils die gleiche Abtastfrequenz von z. B. 13,5 MHz zu verwenden.

Jeder der beiden Chrominanzkanäle 11 und 12 weist eine Einrichtung 20 zur Versteilerung von in den digitalen Chrominanzsignalen B-Y und R-Y auftretenden Flanken auf, die - wie weiter unten noch genauer erläutert wird - am Beginn einer Flanke einen ersten Signalwert, an deren Ende einen zweiten Signalwert sowie einen Wendepunkt der Flanke erfaßt und die eine zwischen diesen beiden Signalwerten auftretende Flanke durch ein versteilertes Flankensignal ersetzt. Dabei wird beispielsweise bis an den Wendepunkt der erste Signalwert festgehalten, am Wendepunkt selbst der Mittelwert aus beiden Signalwerten eingesetzt und nach dem Wendepunkt der zweite Signalwert vorgesehen. Damit ergibt sich eine stufenförmige Flanke.

Darüber hinaus ist zwischen den beiden Chrominanzkanälen 11 und 12 eine Synchronisiereinrichtung 15 angeordnet, um die Positionen detektierter Flanken in den beiden Chrominanzkanälen jeweils miteinander in Deckung bringen zu können.

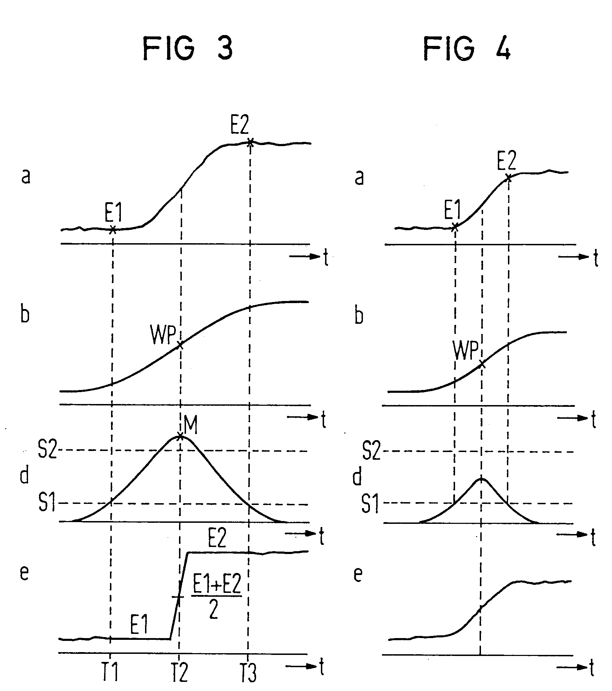

Deutlich wird das erfindungsgemäße Verfahren anhand der Signalverläufe in FIG 3 und 4, wobei die Signale a, b, d und e an den in FIG 2 dargestellten Punkten des beispielhaft herangezogenen ersten Chrominanzkanales 11 abgegriffen werden.

Mit a ist ein Signalübergang, also eine Flanke, bezeichnet, der ein deutlicher Farbunterschied, beispielsweise von gelb nach blau, entspricht. Zu Beginn dieser Flanke beim Zeitpunkt T1 weist das hier digitale Chrominanzsignal einen ersten Signalwert E1 und beim Zeitpunkt T3 einen höheren zweiten Signalwert E2 auf. Wegen der geringen Bandbreite bei der Übertragung der Chrominanzsignale ist die Flanke wesentlich länger als eine Flanke des Luminanzsignales. Die Flanke von E1 nach E2 ist beispielsweise 1000 nsec lang. Gemäß der Erfindung wird dieses digitale Chrominanzsignal tiefpaßgefiltert um auftretende Störanteile im digitalen Chrominanzsignal zu unterdrücken.

Das zu a gehörende tiefpaßgefilterte Signal zeigt b in FIG 3. Anschließend wird aus dem tiefpaßgefilteten Signal b ein Betragssignal d der ersten Ableitung gebildet und der Zeitpunkt T2 des dort auftretenden Maximums M vorteilhafterweise auf einen halben Abtastwert der Abtastfrequenz genau ermittelt, um Jittereffekte im Bild zu vermeiden. Die Lage des Maximums M entspricht genau der des Wendepunktes WP der Flanke des tiefpaßgefilteren Signales b. In der Einrichtung 20 wird die zwischen den Zeitpunkten T1 und T3 liegende Flanke des Chrominanzsignales - vgl. den Signalverlauf a - durch eine versteilerte Flanke ersetzt, wie diese in FIG 3 mit den Bezugszeichen e dargestellt ist. Diese Flanke ist dadurch gekennzeichnet, daß bis zum Zeitpunkt T2 der erste Signalwert E1 festgehalten wird, zum Zeitpunkt T2 selbst der Mittelwert aus dem ersten Signalwert E1 und zweiten Signalwert E2 und nach dem Zeitpunkt T2 der zweite Signalwert E2 eingesetzt wird. Die Flankensteilheit kann auf diese Weise erheblich erhöht und beispielsweise kleiner als 200 nsec gewählt werden.

Um eine optimale Farbwiedergabe des darzustellenden Fernsehbildes zu gewährleisten wird das Betragssignal d von FIG 3 mit einer Schwelle S2 verglichen und der Signalübergang a des Chrominanzsignales nur dann gemäß dem im e gezeigten Signalverlaufes versteilert, wenn diese Schwelle S2 erreicht oder überschritten wird. Es hat sich nämlich herausgestellt, daß ein optimales Bildergebnis hinsichtlich von Artefakten dann erreicht wird, wenn bei nur geringen Farbunterschieden und damit relativ kleinen Signalübergängen auf die eben beschriebene Flankenversteilung verzichtet wird. In FIG 3 ist ein Beispiel eines solchen geringen Signalüberganges, beispielsweise von blau auf blaugrün, gezeigt. Die Schwelle S2 wird vom Betragssignal d dort nicht erreicht. Das Ausgangssignal e entspricht somit dem unveränderten Flankensignal von a.

Eine weitere Schwelle S1 in FIG 3 dient dazu, daß bei deren Überschreitung durch das Betragssignal d, hier im Zeitpunkt T1, der ursprüngliche Signalwert E1 von der auftretenden Flanke des Chrominanzsignales festgehalten wird. Nach dem Maximum des Betragssignales d wird der ursprüngliche Signalwert E2 eingesetzt, der festgestellt wird, wenn das Betragssignal d diese Schwelle S1 unterschreitet.

Gemäß der Erfindung reicht es aus, daß im Luminanzkanal 10 die Verzögerung des digitalen Luminanzsignales durch Registerketten durchgeführt wird. Dies ist gemäß der Erfindung ausreichend um keine Artefakte im Bild auftreten zu lassen.

Die Flankenversteilerung muß dabei nicht unbedingt so gewählt werden, wie es in FIG 3 mit e bezeichnet ist. Vielmehr können auch andere versteilerte Flanken eingesetzt werden, sofern diese etwa in der Mitte der ursprünglich auftretenden Flanke des Chrominanzsignales liegt.

Um das versteilerte Flankensignal anstelle des ursprünglichen Flankensignales im Signalverlauf des Chrominanzsignales einsetzen zu können, ist in der Einrichtung 20 eine Verzögerungseinrichtung vorgesehen, die es ermöglicht, das ursprüngliche Flankensignal auszuwerten und das versteilerte Flankensignal bei Bedarf einzusetzen. Die Laufzeitverzögerung wird im Luminanzkanal 10 durch Registerketten ausgeglichen.

Gemäß der Erfindung ist es also möglich, eine Versteilerung von Übergängen in den Chrominanzsignalen unter Anwendung eines digital arbeitenden Verfahrens zu erzielen, mit dessen Hilfe das Fernsehbild - abhängig von der Vorlage - deutlich an Schärfe gewinnt. Dabei hat die Steilheit des ursprünglichen Übergangs des Chrominanzsignales keinen Einfluß auf die Gruppenlaufzeit des Systems.

## Patentansprüche

1. Verfahren zur Farbkantenverbesserung bei der Darstellung von Farbfernsehbildern, die aus Chrominanzsignalen (R-Y, B-Y) und einem Luminanzsignal (Y) gewonnen werden, bei dem die Chrominanzsignale (R-Y, B-Y) und das Luminanzsignal (Y) als digitale Signale verarbeitet werden, für jedes Chrominanzignal (R-Y, B-Y) zu Beginn einer auftretenden Flanke (a) ein erster Signalwert (E1) und am Ende dieser Flanke (a) ein zweiter Signalwert (E2) erfaßt werden, die zwischen dem ersten Signalwert (E1) und dem zweiten Signalwert (E2) auftretende Flanke (a) durch ein versteilertes Flankensignal (e) ersetzt wird, die in den Chrominanzsignalen (R-Y, B-Y) auftretenden Flanken versteilert werden und das Luminanzsignal (Y) an die Chrominanzsignale (R-Y, B-Y) laufzeitangepaßt wird,
**dadurch gekennzeichnet**, daß ein zwischen den beiden Signalwerten (E1, E2) liegender Wendepunkt (WP) der auftretenden Flanke in seiner Lage erfaßt wird und das versteilerte Flankensignal (e) bis an den Wendepunkt (WP) auf dem ersten Signalwert (E1) festgehalten wird, am Wendepunkt (WP) den Mittelwert aus dem ersten Signalwert (E1) und dem zweiten Signalwert (E2) aufweist und nach dem Wendepunkt (WP) den zweiten Signalwert (E2) aufweist.

2. Verfahren nach Anspruch 1,
**dadurch gekennzeichnet,**
daß jedes Chrominanzsignal (B-Y, R-Y) tiefpaßgefiltert und die Lage des Wendepunktes (WP) an einer Flanke des tiefpaßgefilterten Chrominanzsignales (R-Y, B-Y) erfaßt wird.

3. Verfahren nach Anspruch 2,
**dadurch gekennzeichnet,**
daß jedes tiefpaßgefilterte Chrominanzsignal (b) zur Bildung einer ersten Ableitung differenziert und anschließend daraus ein Betragssignal (d) erzeugt wird, dessen Maximum (M) die Lage des Wendepunktes (WP) bestimmt.

4. Verfahren nach Anspruch 3,
**dadurch gekennzeichnet,**
daß eine erste Schwelle (S1) vorgegeben und der Zeitpunkt (T1) an dem diese Schwelle (S1) vom Betragssignal (d) überschritten wird, den ersten Signalwert (E1) und der Zeitpunkt (T3), an dem diese Schwelle (S1) vom Betragssignal (d) unterschritten wird, den zweiten Signalwert (E1) bestimmt.

5. Verfahren nach Anspruch 3 oder 4,
**dadurch gekennzeichnet,**
daß eine zweite Schwelle (S2) vorgegeben wird und ein Überschreiten dieser zweiten Schwelle (S2) durch das Betragssignal (d) als Entscheidungskriterium für das Aktivieren des versteilerten Flankensignals (e) dient.

6. Verfahren nach Anspruch 1, 2, 3, 4 oder 5,
**dadurch gekennzeichnet,**
daß die Lage (T2) des Wendepunktes (WP) auf eine halbe Abtastperiode einer die digitalen Chrominanzsignale abtastenden Abtastfrequenz genau bestimmt wird.

7. Verfahren nach Anspruch 1, 2, 3, 4, 5 oder 6,
**dadurch gekennzeichnet,**
daß die auftretenden versteilerten Flanken (e) in den Chrominanzsignalen (R-Y, B-Y) jeweils zur Deckung gebracht werden.

8. Verfahren nach einem der Ansprüche 1 bis 7,
**dadurch gekennzeichnet,** daß das Luminanzsignal (Y) durch Registerketten laufzeitverzögert wird.

9. Verfahren nach einem der Ansprüche 1 bis 8,
**dadurch gekennzeichnet,** daß die Chrominanzsignale (R-Y, B-Y) und das Luminanzsignal (Y) als digitale Signale mit gleicher Abtastfrequenz verarbeitet werden.

10. Fernsehgerät mit den Merkmalen:
- Eine Empfangseinrichtung (1) zur Farbdekodierung von Fernsehsignalen weist Ausgangsklemmen (40, 41, 42) auf, an denen Chrominanzsignale (R-Y, B-Y) und ein Luminanzsignal (Y) abgreifbar sind,
- eine der Empfangseinrichtung (1) nachgeschaltete Farbkantenverbesserungseinrichtung (2) weist einen digitalen Luminanzkanal (10) sowie zwei getrennte digitale Chrominanzkanäle (11, 12) auf und Ausgangsklemmen (60, 61, 62), an denen flankenversteilerte Chrominanzsignale (R-Y, B-Y) und ein laufzeitangepaßtes Luminanzsignal (Y) abgreifbar sind,
- der Farbkantenverbesserungseinrichtung (2) sind eine Videosignalverarbeitungseinrichtung (3) und eine Videoausgangsstufe (4) nachgeschaltet,
- jeder Chrominanzkanal (11, 12) weist eine Einrichtung zur Versteilerung von in digitalen Chrominanzsignalen (R-Y, B-Y) auftretenden Flanken auf, die am Beginn einer Flanke einen ersten Signalwert (E1) und am Ende einer Flanke einen zweiten Signalwert (E2) erfaßt und die die zwischen dem ersten Signalwert (E1) und dem zweiten Signalwert (E2) auftretende Flanke durch ein versteilertes Flankensignal (e) ersetzt,
**dadurch gekennzeichnet,** daß
- im Luminanzkanal (10) Registerketten angeordnet sind,
- die Einrichtung zur Versteilerung derart ausgebildet ist, daß ein Wendepunkt (WP) der auftretenden Flanke erfaßt wird,
- Mittel vorgesehen sind, durch die das versteilerte Flankensignal (e) bis zum Wendepunkt (WP) auf dem ersten Signalwert (E1) festgehalten wird, am Wendepunkt (WP) den Mittelwert aus dem ersten Signalwert (E1) und dem zweiten Signalwert (E2) aufweist und nach dem Wendepunkt (WP) den zweiten Signalwert (E2) aufweist.

11. Fernsehgerät nach Anspruch 10,
**dadurch gekennzeichnet,** daß jeder Chrominanzkanal (11, 12) eine Einrichtung (20) zum Erzeugen eines versteilerten Flankensignales (e) mit drei Eingangsklemmen (21, 22, 23) und einer Ausgangsklemme (3) aufweist,
daß die erste Eingangsklemme (21) der Einrichtung (20) mit einer Eingangsklemme (54, 55) für den entsprechenden Chrominanzkanal (11, 12) verbunden ist,
daß zwischen der zweiten Eingangsklemme (22) der Einrichtung (20) und der Eingangsklemme (54, 55) des entsprechenden Chrominanzkanales (11, 12) die Reihenschaltung eines Tiefpasses (7) einer Differenzierstufe (8) zur Bildung der ersten Ableitung, eine Betragsbildungsstufe (9) sowie einen Maximumdetektiereinrichtung (13) geschaltet ist, und
daß zwischen der dritten Eingangsklemme (23) der Einrichtung (20) und dem Ausgang der Betragsbildungsstufe (9) eine Schwellwertvergleicherstufe (14) angeordnet ist.

12. Fernsehgerät nach Anspruch 10 oder 11,
**dadurch gekennzeichnet,**
daß zwischen die beiden Chrominanzkanälen (11, 12) eine Synchronisiereinrichtung (15) geschaltet ist.

## Claims

1. Method for improving colour edges when displaying colour television pictures which are obtained from chrominance signals (R-Y, B-Y) and a luminance signal (Y), in the case of which the chrominance signals (R-Y, B-Y) and the luminance signal (Y) are processed as digital signals, a first signal value (E1) at the start of an occurring edge (a) and a second signal value (E2) at the end of this edge (a) are detected for each chrominance signal (R-Y, B-Y), that edge (a) which occurs between the first signal value (E1) and the second signal value (E2) is replaced by a steepened edge signal (e), those edges which occur in the chrominance signals (R-Y, B-Y) are steepened and the delay time of the luminance signal (Y) is matched to that of the chrominance signals (R-Y, B-Y), characterized in that the position of a point of inflection (WP), which is located between the two signal values (E1, E2), of the edge which occurs is detected and the steepened edge signal (e) is fixed at the first signal value (E1) until the point of inflection (WP), has the mean value of the first signal value (E1) and the second signal value (E2) at the point of inflection (WP), and has the second signal value (E2) after the point of inflection (WP).

2. Method according to Claim 1, characterized in that each chrominance signal (B-Y, R-Y) is low-pass filtered and the positions of the point of inflection (WP) is detected on an edge of the low-pass-filtered chrominance signal (R-Y, B-Y).

3. Method according to Claim 2, characterized in that each low-pass-filtered chrominance signal (b) is differentiated in order to form a first derivative, and a magnitude signal (d) is subsequently produced from this first derivative, the maximum (M) of which magnitude signal (d) determines the position of the point of inflection (WP).

4. Method according to Claim 3, characterized in that a first threshold (S1) is specified and the time (T1) at which the magnitude signal (d) exceeds this threshold (S1) determines the first signal value (E1), and the time (T3) at which the magnitude signal (d) becomes less than this threshold (S1) determines the second signal value (E1).

5. Method according to Claim 3 or 4, characterized in that a second threshold (S2) is specified, and, if the magnitude signal (d) exceeds this second threshold (S2), this is used as a decision criterion for the activation of the steepened edge signal (e).

6. Method according to Claim 1, 2, 3, 4 or 5, characterized in that the position (T2) of the point of inflection (WP) is determined precisely at half a sampling period of a sampling frequency which samples the digital chrominance signals.

7. Method according to Claim 1, 2, 3, 4, 5 or 6, characterized in that the steepened edges (e) which occur in the chrominance signals (R-Y, B-Y) are in each case superimposed.

8. Method according to one of Claims 1 to 7, characterized in that the luminance signal (Y) is time-delayed by means of register chains.

9. Method according to one of Claims 1 to 8, characterized in that the chrominance signals (R-Y, B-Y) and the luminance signal (Y) are processed as digital signals with the same sampling frequency.

10. Television set having the features:
- a receiving device (1) for colour decoding of television signals has output terminals (40, 41, 42) on which chrominance signals (R-Y, B-Y) and a luminance signal (Y) can be picked off,
- a colour edge improvement device (2), which is connected downstream of the receiving device (1), has a digital luminance channel (10) as well as two separate digital chrominance channels (11, 12), and output terminals (60, 61, 62) on which it is possible to pick off chrominance signals (R-Y, B-Y) whose edges have been steepened, and a luminance signal (Y) whose delay time has been adapted,
- a video signal processing device (3) and a video output stage (4) are connected downstream of the colour edge improvement device (2),
- each chrominance channel (11, 12) has a device for steepening edges which occur in digital chrominance signals (R-Y, B-Y), which device detects a first signal value (E1) at the start of an edge and a second signal value (E2) at the end of an edge, and which replaces that edge which occurs between the first signal value (E1) and the second signal value (E2) by a steepened edge signal (e),
characterized in that
- register chains are arranged in the luminance channel (10),
- the device for steepening is designed in such a manner that a point of inflection (WP) of the edge which occurs is detected,
- means are provided as a result of which the steepened edge signal (e) is fixed at the first signal value (E1) until the point of inflection (WP), has the mean value of the first signal value (E1) and the second signal value (E2) at the point of inflection (WP), and has the second signal value (E2) after the point of inflection (WP).

11. Television set according to Claim 10, characterized in that each chrominance channel (11, 12) has a device (20) for producing a steepened edge signal (e), having three input terminals (21, 22, 23) and one output terminal (3), in that the first input terminal (21) of the device (20) is connected to an input terminal (54, 55) for the corresponding chrominance channel (11, 12), in that the series circuit formed by a low-pass filter (7), a differentiating stage (8) for forming the first derivative, a magnitude forming stage (9) and a maximum detecting device (13) is connected between the second input terminal (22) of the device (20) and the input terminal (54, 55) of the corresponding chrominance channel (11, 12), and in that a threshold value comparator stage (14) is arranged between the third input terminal (23) of the device (20) and the output of the magnitude forming stage (9).

12. Television set according to Claim 10 or 11, characterized in that a synchronization device (15) is connected between the two chrominance channels (11, 12).

## Revendications

1. Procédé de correction de bords de couleurs dans la représentation d'images de télévision couleur, que l'on obtient à partir de signaux (R-Y, B-Y) de chrominance et d'un signal (Y) de luminance, dans lequel on traite les signaux (R-Y, B-Y) de chrominance et le signal (Y) de luminance en tant que signaux numériques, on détecte pour chaque signal (R-Y, B-Y) de chrominance, au début de l'apparition d'un flanc (a) une première valeur (E1) du signal et à la fin de ce flanc (a) une deuxième valeur (E2) de signal, on remplace le flanc (a) apparaissant entre la première valeur (E1) du signal et la deuxième valeur (E2) du signal par un signal (e) de flanc raidi, on raidit les flancs apparaissant dans les signaux (R-Y, B-Y) de chrominance et on adapte le temps de propagation du signal (Y) de luminance à ceux des signaux (R-Y, B-Y) de chrominance,
caractérisé en ce que l'on détecte la position d'un point (WP) d'inflexion, se trouvant entre les deux valeurs (E1, E2) du signal, du flanc apparaissant, on fixe le signal (e) de flanc raidi à la première valeur (E1) du signal jusqu'au point (WP) d'inflexion, le signal (e) de flanc raidi a au point (WP) d'inflexion la valeur moyenne de la première valeur (E1) du signal et de la deuxième valeur (E2) du signal et a après le point (WP) d'inflexion la deuxième valeur (E2) du signal.

2. Procédé suivant la revendication 1, caractérisé en ce que l'on effectue un filtrage passe-bas de chaque signal (B-Y, R-Y) de chrominance et on détecte la position du point (WP) d'inflexion sur un flanc du signal (R-Y, B-Y) de chrominance ayant subi le filtrage passe-bas.

3. Procédé suivant la revendication 2, caractérisé en ce que l'on différencie chaque signal (b) de chrominance ayant subi un filtrage passe-bas pour former une dérivée première et on produit à partir de cette dérivée un signal (d) de module, dont le maximum (M) détermine la position du point (WP) d'inflexion.

4. Procédé suivant la revendication 3, caractérisé en ce que l'on prescrit un premier seuil (S1), l'instant (T1) auquel le signal (d) de module devient inférieur à ce seuil (S1), détermine la première valeur (E1) du signal et l'instant (T3), auquel le signal (d) de module passe sous ce seuil (S1), détermine la deuxième valeur (E1) du signal.

5. Procédé suivant la revendication 3 ou 4, caractérisé en ce que l'on prescrit un deuxième seuil (S2) et on utilise un passage au-dessus de ce deuxième seuil (S2) par le signal (d) de module comme critère de décision pour l'activation du signal (e) de flanc raidi.

6. Procédé suivant la revendication 1, 2, 3, 4 ou 5, caractérisé en ce que l'on détermine précisément la position (T2) du point (WP) d'inflexion égale à une demie-période d'échantillonnage d'une fréquence d'échantillonnage échantillonnant les signaux numériques de chrominance.

7. Procédé suivant la revendication 1, 2, 3, 4, 5 ou 6, caractérisé en ce que on amène les flancs (e) raidis apparaissant dans les signaux (R-Y, B-Y) de chrominance à coïncider.

8. Procédé suivant l'une des revendications 1 à 7, caractérisé en ce que l'on retarde le temps de propagation du signal (Y) de luminance par des chaînes de registre.

9. Procédé suivant l'une des revendications 1 à 8, caractérisé en ce que l'on traite les signaux (R-Y, B-Y) de chrominance et le signal (Y) de luminance comme signaux numériques à la même fréquence d'échantillonnage.

10. Appareil de télévision ayant les particularités suivantes :
- un dispositif (1) de réception destiné au décodage des couleurs de signaux de télévision comporte des bornes (40, 41, 42) de sortie sur lesquelles peuvent être prélevés des signaux (R-Y, B-Y) de chrominance et un signal (Y) de luminance,
- un dispositif (2) de correction de bords de couleurs, qui est branché en aval du dispositif (1) de réception, comporte un canal (10) numérique de luminance ainsi que deux canaux (11, 12) numériques distincts de chrominance et des bornes (60, 61, 62) de sortie, sur lesquelles peuvent être prélevés des signaux (R-Y, B-Y) de chrominance, dont des flancs sont raidis, et un signal (Y) de luminance, dont le temps de propagation est adapté,
- un dispositif (3) de correction de signaux vidéo et un étage (4) de sortie vidéo sont branchés en aval du dispositif (2) de correction de bords de couleurs,
- chaque canal (11, 12) de chrominance comporte un dispositif, qui est destiné à raidir des flancs apparaissant dans des signaux (R-Y, B-Y) numériques de chrominance, qui détecte au début d'un flanc une première valeur (E1) de signal et à la fin d'un flanc une deuxième valeur (E2) de signal et qui remplace le flanc apparaissant entre la première valeur (E1) de signal et la deuxième valeur (E2) de signal par un signal (e) de flanc raidi,
caractérisé en ce que
les chaînes de registre sont disposées dans le canal (10) de luminance,
le dispositif destiné à raidir est formé de sorte à détecter un point (WP) d'inflexion du flanc apparaissant,
des moyens sont prévus, par lesquels le signal (e) de flanc raidi est fixé, jusqu'au point (WP) d'inflexion, à la première valeur (E1) du signal, a au point (WP) d'inflexion la valeur moyenne de la première valeur (E1) de signal et de la deuxième valeur (E2) de signal et a après le point (WP) d'inflexion la deuxième valeur (E2) de signal.

11. Appareil de télévision suivant la revendication 10, caractérisé en ce que chaque canal (11, 12) de chrominance comporte un dispositif (20) destiné à produire un signal (e) de flanc raidi et comportant trois bornes (21, 22, 23) d'entrée et une borne (3) de sortie,
la première borne (21) d'entrée du dispositif (20) est reliée à une borne (54, 55) d'entrée pour le canal (11, 12) correspondant de chrominance,
le circuit-série formé d'un passe-bas (7), d'un étage (8) différenciateur destiné à former la dérivée première, d'un étage (9) de formation de module ainsi qu'un dispositif (13) de détection d'un maximum est branché entre la deuxième borne (22) d'entrée du dispositif (20) et la borne (54, 55) d'entrée du canal (11, 12) correspondant de chrominance et un étage (14) de comparaison à un seuil est disposé entre la troisième borne (23) du dispositif (20) et la sortie de l'étage (9) de formation de module.

12. Appareil de télévision suivant la revendication 10 ou 11, caractérisé en ce qu'un dispositif (15) de synchronisation est branché entre les deux canaux (11, 12) de chrominance.
